# FASCICULE DE BREVET EUROPEEN

(11) **EP 2 832 037 B1**
(45) Date de publication et mention de la délivrance du brevet: **01.05.2019**
(21) Numéro de dépôt: 13715381.3
(22) Date de dépôt: 27.03.2013
(51) Int. Cl.: H04M 15/00, H04W 4/021, H04W 4/24, H04W 8/00, H04W 24/02, H04W 64/00, H04L 12/24, H04L 12/14

(54) **PROCÉDÉS POUR L'APPLICATION DE RÈGLES DE TRAITEMENT DE SESSION EN FONCTION D'UNE CARTE DE PRÉSENCE DE TERMINAUX MOBILES DANS DES ZONES SPÉCIALES**
VERFAHREN ZUR IMPLEMENTIERUNG VON SITZUNGSVERARBEITUNGSREGELN BASIEREND AUF ANWESENHEITSKARTE MOBILER ENDGERÄTE IN SONDERBEREICHE
METHOD FOR IMPLEMENTING SESSION PROCESSING RULES BASED ON A PRESENCE MAP OF MOBILE TERMINALS IN SPECIAL AREAS

(30) Priorité: 30.03.2012 FR 1252918
(43) Date de publication de la demande: 04.02.2015
(73) Titulaire: Orange, 75015 Paris (FR)
(72) Inventeur: CHATRAS, Bruno, F-75012 Paris (FR); GARCIA, Jean-Luc, F-92190 Meudon (FR); MOUAFIK, Ali Amine, F-92130 Issy les Moulineaux (FR)
(86) Numéro de dépôt international: PCT/FR2013/050659
(87) Numéro de publication internationale: WO 2013/144505

(56) Documents cités:
- EP-A1- 2 424 317
- WO-A2-2007/147142
- US-A1- 2009 254 494
- US-A1- 2011 201 303
- US-A1- 2012 026 947

## Description

### 1. Domaine de l'invention

Le domaine de l'invention est celui de la gestion des sessions de communication entre un terminal mobile et un réseau de commutation par paquets, au travers d'un réseau mobile, et plus particulièrement celui de la gestion du contrôle des paramètres de qualité de service et des règles tarifaires appliqués aux sessions de communication en fonction de la localisation des terminaux.

### 2. Etat de la technique antérieure

Dans les réseaux mobiles selon les normes 3GPP (3rd Generation Partnership Project en anglais, ou projet de partenariat de troisième génération) à partir de la version 8 finalisée en décembre 2008, en particulier selon la spécification TS 23.203, il est possible de modifier les paramètres de qualité de service et les règles tarifaires appliqués à une session de communication existante en fonction de données de localisation du terminal.

Les messages de signalisation échangés entre les diverses entités du réseau mobile indiquent la localisation du terminal de l'utilisateur, chaque fois que celle-ci change.

Ainsi, une modification de la qualité de service (par exemple la bande passante allouée, ou de priorisation), ou de la tarification peut être décidée en temps réel, en fonction d'événements incluant un changement de la localisation du terminal de l'utilisateur.

Plusieurs niveaux de granularité de zones de localisation existent. Le niveau à granularité la plus fine est la zone couverte par le rayonnement d'une antenne relais, appelée cellule. Un autre niveau est celui de la "tracking area" (zone de surveillance, en anglais), qui regroupe une ou plusieurs cellules selon la configuration déterminée par l'opérateur.

Quel que soit le niveau de granularité choisi pour le déclenchement des messages de signalisation relative au suivi de la localisation des utilisateurs, si la notification de changement de localisation était activée pour tous les utilisateurs du réseau mobile, cela entrainerait inéluctablement un fort trafic de signalisation sur les différentes interfaces et équipements de l'architecture, que seul un redimensionnement du réseau pourrait satisfaire.

De plus, il n'y a pas de corrélation préalable entre la signalisation relative à un changement de localisation, et le besoin de modifier la session de communication. En effet, dans un réseau mobile, beaucoup de zones de localisation, sinon la majorité, partagent les mêmes caractéristiques de qualité de service ou de tarification. Une grande partie la signalisation générée relative aux changements de localisation des terminaux est donc en réalité inutile.

La demande de brevet US 2012/026947 décrit une solution permettant une modification de la qualité de service d'un terminal en temps réel, en fonction d'un changement de sa localisation, mais ne résout pas le problème des signalisations inutiles.

Il existe un besoin d'une solution pour modifier en temps réel les paramètres de qualité de service ou les règles tarifaires d'une session de communication selon la localisation de l'utilisateur, qui ne présente pas ces inconvénients.

### 3. Exposé de l'invention

L'invention vient améliorer la situation à l'aide d'un procédé de transmission de carte de présence de terminaux mobiles connectés à un réseau mobile couvrant une pluralité de zones de localisation, mis en oeuvre par un équipement du réseau mobile apte à collecter des informations de localisation de terminaux mobiles, le procédé comprenant :
- une étape préalable d'obtention d'une information dite zonale, comprenant au moins une information relative à l'existence d'au moins une zone de la pluralité de zones de localisation, dite zone spéciale, à laquelle est associée une règle spéciale de traitement de session,
- au moins une étape itérative de mise à jour d'une carte de présence associant des identifiants de zone de localisation à des identifiants de terminal, l'étape comprenant les étapes suivantes:
   ∘ collecte d'une information de localisation d'un terminal, comprenant un identifiant de zone de localisation de ce terminal,
   ∘ recherche, dans l'information zonale, s'il existe une zone spéciale correspondant à l'identifiant de ladite zone de localisation, et,
   ∘ lorsque la zone spéciale existe, ajout de l'identifiant du terminal et de l'identifiant de la zone de localisation à la carte de présence de terminaux,
- et une étape de transmission de la carte de présence de terminaux vers un équipement du réseau mobile apte à appliquer une règle de traitement de session à un terminal en fonction d'au moins sa zone de localisation.

Grâce à l'obtention préalable de l'information zonale, le procédé prend connaissance des zones, dites zones spéciales, pour lesquelles il est par exemple possible, ou souhaitable, d'appliquer à un terminal une règle de traitement de session différente selon sa localisation (qualité de service, ou tarification). La liste des zones spéciales est comprise dans l'information zonale. L'information zonale peut aussi indiquer qu'il n'existe aucune zone spéciale.

Une fois l'information zonale obtenue, le procédé s'engage dans une mise à jour itérative d'une carte de présence. Le rôle de la carte de présence est d'indiquer quels sont les terminaux présents dans chacune des zones spéciales. Chaque fois qu'une information de localisation est collectée, la connaissance de l'information zonale permet de déterminer si cette information de localisation est pertinente d'un point de vue de l'application d'une règle de traitement de session aux terminaux. Lorsque l'information de localisation d'un terminal collectée indique qu'il se trouve dans une zone spéciale, l'identifiant du terminal et l'identifiant de la zone en question sont ajoutés à la carte de présence, ou l'identifiant du terminal est ajouté à une liste dans la carte de présence correspondant à l'identifiant de la zone, selon le format de carte de présence utilisé. Sinon, l'information de localisation est ignorée.

Avec l'invention, c'est seulement à l'issue la mise à jour itérative de la carte de présence qu'elle est transmise. Selon la technique antérieure, au contraire, chaque étape de collecte d'une information de localisation donnait lieu à une étape de transmission d'une information correspondante.

On comprend qu'avec l'invention, une information de localisation ne se traduit pas par l'émission correspondante d'une information de localisation, car seules les informations pertinentes issues des informations de localisation collectées sont conservées, puis regroupées avant une étape de transmission de la carte de présence. L'invention permet donc une diminution du nombre de messages émis relatifs aux changements de localisation des terminaux, et donc une réduction du volume de la signalisation échangée dans le réseau.

L'invention propose donc une approche nouvelle et inventive de la gestion de la signalisation relative aux changements de localisation d'un terminal mobile, qui consiste à filtrer les informations qui ne sont pas pertinentes pour l'application d'une règle de traitement de session aux terminaux, et à regrouper les informations pertinentes dans une carte de présence.

Ce procédé de transmission de carte peut être mis en oeuvre par un équipement du réseau mobile apte à gérer la mobilité des terminaux, tel qu'un équipement central de localisation de terminaux mobiles GMLC (Gateway Mobile Location Center, en anglais, et selon la norme 3GPP) ou qu'une entité de gestion de la mobilité MME (Mobility Management Entity, en anglais, et selon la norme 3GPP). Un GMLC est connecté à tous les MME et est donc apte à gérer de façon centralisée la mobilité des terminaux.

Selon un aspect de l'invention, la première étape de collecte d'une information de localisation d'un terminal est précédée d'une étape d'émission d'une requête d'abonnement aux informations de localisation de terminaux.

Afin que l'équipement apte à collecter des informations de localisation de terminaux, puisse les recevoir, il peut avoir à demander au préalable d'être destinataire de ces informations. De cette manière les informations de localisation ne sont transmises par le réseau que lorsqu'elles sont utilisées.

Selon un autre aspect de l'invention, l'étape de transmission de la carte de présence est suivie d'une étape d'émission d'une requête de désabonnement aux d'informations de localisation de terminaux.

Afin que l'équipement apte à collecter des informations de localisation de terminaux, puisse cesser de les recevoir lorsque ce n'est plus utile, par exemple lorsqu'il n'y a plus de zone spéciale, il peut demander de cesser d'être destinataire de ces informations. Ceci évite d'encombrer le réseau avec des transmissions d'information de localisation qui ne seront pas utilisées.

Selon un aspect de l'invention, si la carte de présence est trop volumineuse pour être transmise dans un seul message, elle peut être découpée et transmise par morceaux.

Selon un aspect du procédé de transmission de carte de présence, l'information zonale comprend un élément appartenant au groupe comprenant:
- aucun identifiant de zone spéciale,
- au moins un identifiant de zone spéciale.

En d'autres termes, l'information zonale peut contenir zéro, un ou plusieurs identifiants de zone de localisation correspondant à des zones spéciales. L'information zonale peut en effet ne contenir aucun identifiant de zone spéciale, par exemple lorsqu'il n'y a plus de zones pour lesquelles il est possible, ou souhaitable, d'appliquer à un terminal une règle de traitement de session différente selon sa localisation (qualité de service, ou tarification). Dans ce cas particulier où l'information zonale contient une information indiquant qu'il n'existe aucune zone spéciale, aucune des étapes itératives de mise à jour ne se traduit par un ajout dans la carte de présence. La carte de présence est donc dans ce cas transmise "vide", c'est-à-dire sans aucun identifiant de terminal, ce qui a l'avantage d'indiquer à un équipement apte à appliquer une règle de traitement de session à un terminal selon sa zone de localisation que l'information zonale "vide" a bien été prise en compte. Lorsque l'information zonale est "vide" il est en effet préférable de transmettre une carte de présence "vide" plutôt que de ne pas transmettre de carte, car cette dernière alternative comporte une incertitude sur la cause de la non-transmission, qui peut aussi être due à un dysfonctionnement de la signalisation.

Selon un aspect de l'invention, l'étape d'obtention de l'information zonale est suivie d'une étape de traduction des identifiants de zones spéciales.

En général, les identifiants compris dans l'information zonale et les identifiants compris dans les informations de localisation partagent le même système de codification des zones. Mais dans certains cas deux systèmes de codification différents sont utilisés. Par exemple, l'information zonale peut utiliser des identifiants de zone propres au type de réseau mobile, comme LAI (Location Area Identity en anglais, ou identité de zone de localisation) pour les réseaux GSM, TAI (Tracking Area Identity en anglais, ou identité de zone de recherche) pour les réseaux LTE, ou encore des appellations géographiques ou des coordonnées géographiques. De son côté, l'information de localisation d'un terminal peut utiliser des identifiants de cellule de réseau mobile (appelés Cell Id en anglais). Dans les cas où les systèmes de codification sont différents, le procédé effectue une traduction des identifiants d'un système vers l'autre.

Selon un aspect du procédé de transmission de carte de présence, l'étape de transmission de la carte de présence est périodique, la durée de la période étant comprise dans l'information zonale.

L'équipement transmettant la carte de présence, apte à collecter des informations de localisation de terminaux, transmet la carte à l'issue d'une période, dite de mise à jour, incluant un certain nombre d'étapes itératives de mise à jour de la carte de présence. La durée de cette période de mise à jour a un impact sur l'équipement récepteur de la carte de présence, qui est un équipement apte à appliquer une règle de traitement de session aux terminaux, et qui doit pouvoir suivre la mobilité des terminaux avec un certain degré de précision, dépendant de la durée s'écoulant entre deux transmissions de la carte de présence, c'est-à-dire précisément, dépendant de la durée de la période de mise à jour. Avantageusement, le fait que la durée de cette période de mise à jour soit comprise dans l'information zonale permet à un équipement, autre que celui apte à collecter les informations de localisation des terminaux, d'en ajuster la durée. Cet autre équipement peut par exemple être l'équipement apte à appliquer une règle de traitement de session aux terminaux.

Selon un aspect du procédé de transmission de carte de présence, l'étape préalable d'obtention d'une information zonale est suivie d'une étape de suppression, dans la carte de présence, des identifiants de zone de localisation absents de l'information zonale, et des identifiants de terminaux correspondants présents dans ces zones.

Lorsqu'une information zonale est reçue, une carte de présence peut déjà exister et contenir des informations de localisation de terminaux relatives à des zones de localisation qui étaient comprises dans une version précédente de l'information zonale, mais qui ne sont plus comprises dans la nouvelle information zonale. Avantageusement, en supprimant de la carte de présence ces informations qui ne sont plus pertinentes, le volume de la carte de présence est diminué, ce qui résulte en une diminution de la signalisation relative aux changements de localisation des terminaux dans le réseau. Cela résulte également en une diminution des calculs nécessaires au traitement de la carte de présence par l'équipement qui la reçoit.

Selon un aspect de l'invention, la carte de présence comprend une liste de couples { identifiant d'une zone de localisation ; liste d'identifiants de terminaux présents dans cette zone}.

On voit qu'avec ce format particulier la carte de présence comprend au moins autant de champs qu'il existe de zones spéciales, mais ne réplique pas les champs de zone lorsque plusieurs terminaux s'y trouvent. Ce format est particulièrement adapté pour optimiser la taille de la carte de présence lorsqu'un grand nombre de terminaux se trouvent dans une même zone spéciale.

Selon un aspect de l'invention, la carte de présence comprend une liste de couples { identifiant d'une zone de localisation ; identifiant d'un terminal présent dans cette zone }.

On voit qu'avec cette variante de format, la carte de présence comprend au moins autant de champs que le double du nombre de terminaux présents dans une des zones spéciales, mais ne contient aucun champ correspondant à une zone spéciale dans laquelle ne se trouve aucun terminal. Cette variante de format est adaptée pour optimiser la taille de la carte de présence lorsqu'il n'y a que peu ou pas de terminaux se trouvant dans les zones spéciales.

L'invention concerne aussi un procédé d'application d'une règle de traitement de session à au moins un terminal mobile connecté à un réseau mobile couvrant une pluralité de zones de localisation, comprenant une étape préalable d'obtention d'un ensemble de règles de traitement de session associées à un sous-ensemble de la pluralité de zones, le procédé comprenant :
- une étape préalable d'émission d'une information dite zonale, comprenant au moins une information relative à l'existence d'au moins une zone de la pluralité de zones de localisation, dite zone spéciale, à laquelle est associée une règle spéciale de traitement de session,
- une étape d'obtention d'une carte de présence de terminaux, associant des identifiants de zone spéciale à des identifiants de terminal,
- lorsqu'au moins un identifiant de terminal est compris dans la carte de présence, les étapes suivantes:
   ∘ identification de la règle de traitement de session associée à la zone de localisation du terminal telle qu'indiquée dans la carte de présence,
   ∘ obtention d'une règle de traitement de session préalablement appliquée audit au moins un terminal, et
- comparaison des deux règles,
- lorsque la règle identifiée et la règle préalablement appliquée sont différentes, une étape d'application de la règle identifiée audit au moins un terminal.

La localisation d'un terminal est un des critères conditionnant la règle de traitement de session dont il peut bénéficier. Selon les normes 3GPP à partir de la version 8, ces critères sont décrits par des "PCC rules" (Policy and Charging Control rules en anglais, ou règles de contrôle de la politique et du comptage), qui sont des règles d'application d'une politique de traitement de session, comprenant des paramètres de qualité de service et des règles tarifaires, à appliquer pour un flux ou un ensemble de flux de paquets. L'ensemble des règles spéciales de traitement de session désigne un ensemble de "PCC rules" accompagné d'une indication de la ou des zones de localisation pour laquelle ou pour lesquelles chacune des "PCC rules" s'applique. En fonction de paramètres propres au terminal tels que le profil de l'abonné et le service demandé, il existe aussi une règle "par défaut", applicable aux zones de localisation, dites "ordinaires", auxquelles aucune règle spéciale n'est associée.

L'information zonale comprend une liste des zones pour lesquelles il existe une ou plusieurs règles spéciale de traitement de session. Ces zones sont dites spéciales. Pour les zones ordinaires qui ne sont pas des zones spéciales, il existe la règle "par défaut" de traitement de session. En réponse à l'émission de l'information zonale, une carte de présence est obtenue de façon périodique. La carte de présence indique quels sont les terminaux présents dans chacune des zones spéciales, mais n'indique pas les terminaux présents dans une zone ordinaire.

Pour chacun des terminaux indiqués par la carte de présence, la règle spéciale de traitement de session à appliquer est identifiée à partir de sa zone de localisation, également indiquée par la carte de présence. Dans certains cas la règle identifiée peut être la même que celle qui était préalablement appliquée: c'est par exemple le cas si le terminal était déjà dans sa zone spéciale lors d'une application d'une règle de traitement de session ayant eu lieu préalablement. C'est aussi le cas si le terminal se trouvait dans une autre zone à laquelle est associée la même règle spéciale de traitement de session. Dans ces cas, aucune application nouvelle d'une règle de traitement de session n'est nécessaire. C'est seulement lorsqu'elles sont différentes que l'application d'une règle spéciale de traitement de session, selon la règle identifiée, est nécessaire.

Dans d'autres cas, la carte de présence peut être vide, indiquant par là qu'aucun terminal ne se trouve dans une zone spéciale, auquel cas aucun terminal ne doit se voir appliquer de règle spéciale de traitement de session.

Le procédé permet ainsi d'appliquer une règle spéciale de traitement de session à des terminaux se trouvant dans des zones spéciales, et uniquement à ceux-ci, tout en évitant de réappliquer la même règle aux mêmes terminaux chaque fois qu'une carte de présence de terminaux est obtenue.

Ce procédé d'application d'une règle de traitement de session peut être mis en oeuvre par un équipement du réseau mobile apte à gérer l'application d'une règle de traitement de session aux terminaux, tel qu'un équipement de gestion PCRF (Policy and Charging Rules Function en anglais, ou fonction des règles de politique et de comptage). L'information zonale et la carte de présence peuvent être échangés entre le PCRF et le GMLC au travers d'une nouvelle interface client/serveur LCS (Location Control Service en anglais, ou service de contrôle de localisation) selon la norme OMA (Open Mobile Alliance en anglais, ou alliance ouverte pour les mobiles), le PCRF prenant le rôle de client LCS.

Selon un aspect du procédé d'application d'une règle de traitement de session, la règle de traitement de session préalablement appliquée est identifiée par la recherche, dans une autre carte de présence préalablement obtenue, de l'identifiant de l'au moins un terminal et de sa zone de localisation, puis par l'identification de la règle correspondant à cette zone de localisation.

En comparant deux cartes de présence obtenues à deux périodes différentes, il est possible de déduire les mouvements exacts de certains terminaux dans l'intervalle de temps entre ces deux instants, ce qui est nécessaire dans certains cas de figure.

Par exemple, lorsqu'un terminal quitte une zone spéciale pour une autre zone spéciale dotée de la même règle de traitement de session, il apparait bien dans les deux cartes, mais un changement de règle n'est pas nécessaire.

Grâce à la comparaison entre les deux cartes de présence, il est possible d'appliquer une règle de traitement de session selon une règle spéciale dans tous les cas où cela est nécessaire, et de ne jamais le faire lorsque ce n'est pas nécessaire.

Selon un aspect du procédé d'application d'une règle de traitement de session, l'étape d'obtention de la carte de présence de terminaux est suivie d'une étape d'application d'une règle de traitement de session à l'au moins un terminal selon une règle prédéterminée, lorsqu'un identifiant du terminal est compris dans une carte de présence préalablement obtenue, et n'est pas compris dans la carte de présence.

Lorsqu'un terminal quitte une zone spéciale pour une zone ordinaire, il apparait dans une première carte de présence et n'apparait plus dans la plus récente, mais un changement de règle est bien nécessaire.

Grâce à l'examen des identifiants de terminaux compris dans une carte de présence préalablement obtenue, il est possible de cesser d'appliquer une règle spéciale de traitement de session à un terminal qui n'est plus dans une zone spéciale. Dans ce cas, la règle appliquée au terminal est appliquée selon la règle de traitement de session "par défaut", applicables aux zones de localisation ordinaires.

L'invention concerne un dispositif de transmission de carte de présence de terminaux mobiles connectés à un réseau mobile couvrant une pluralité de zones de localisation, mis en oeuvre par un équipement du réseau mobile apte à collecter des informations de localisation de terminaux mobiles, le dispositif comprenant :
- des moyens d'obtention préalable d'une information dite zonale, comprenant au moins une information relative à l'existence d'au moins une zone de la pluralité de zones de localisation, dite zone spéciale, à laquelle est associée une règle spéciale de traitement de session,
- des moyens de mise à jour itérative d'une carte de présence associant des identifiants de zone de localisation à des identifiants de terminal, les moyens comprenant les moyens suivants:
   ∘ collecte d'une information de localisation d'un terminal, comprenant un identifiant de zone de localisation de ce terminal,
   ∘ recherche, dans l'information zonale, s'il existe une zone spéciale correspondant à l'identifiant de ladite zone de localisation, et,
   ∘ lorsque la zone spéciale existe, ajout de l'identifiant du terminal et de l'identifiant de la zone de localisation à la carte de présence de terminaux,
   et des moyens de transmission de la carte de présence de terminaux vers un équipement du réseau mobile apte à appliquer une règle de traitement de session à un terminal en fonction d'au moins sa zone de localisation.

L'invention concerne aussi un dispositif d'application d'une règle de traitement de session à au moins un terminal mobile connecté à un réseau mobile couvrant une pluralité de zones de localisation, comprenant des moyens d'obtention préalable d'un ensemble de règles de traitement de session associées à un sous-ensemble de la pluralité de zones, le dispositif comprenant :
- des moyens d'émission préalable d'une information dite zonale, comprenant au moins une information relative à l'existence d'au moins une zone de la pluralité de zones de localisation, dite zone spéciale, à laquelle est associée une règle spéciale de traitement de session,
- des moyens d'obtention d'une carte de présence de terminaux, associant des identifiants de zone spéciale à des identifiants de terminal,
- lorsqu'au moins un identifiant de terminal est compris dans la carte de présence, les moyens suivants:
   ∘ identification de la règle de traitement de session associée à la zone de localisation du terminal telle qu'indiquée dans la carte de présence,
   ∘ obtention d'une règle de traitement de session préalablement appliquée audit au moins un terminal, et
   ∘ comparaison des deux règles,
- lorsque la règle identifiée et la règle préalablement appliquée sont différentes, des moyens d'application de la règle identifiée audit au moins un terminal.

L'invention concerne un équipement d'un réseau de communication, apte à collecter des informations de localisation de terminaux mobiles, comprenant un dispositif de transmission de carte de présence.

L'invention concerne aussi un équipement d'un réseau de communication, apte à appliquer une règle de traitement de session à un terminal en fonction de sa zone de localisation et d'au moins une règle, comprenant un dispositif d'application d'une règle de traitement de session.

L'invention concerne un système de signalisation de présence de terminaux comprenant : un équipement comprenant un dispositif d'application d'une règle de traitement de session, et au moins un équipement comprenant un dispositif de transmission de carte de présence.

L'invention concerne un programme d'ordinateur comprenant des instructions pour la lise en oeuvre d'un procédé de transmission de carte de présence, lorsque ce programme et exécuté par un processeur.

L'invention concerne enfin un programme d'ordinateur comprenant des instructions pour la mise en oeuvre d'un procédé d'application d'une règle de traitement de session, lorsque ce programme et exécuté par un processeur.

Ces programmes, stockés sur un support lisible par ordinateur, peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente l'architecture d'un réseau mobile selon la technique antérieure,
- la figure 2 présente l'architecture d'un réseau mobile selon l'invention,
- la figure 3 présente la structure d'une information zonale selon l'invention,
- la figure 4 présente la structure d'une carte de présence selon l'invention,
- la figure 5 présente une variante de la structure d'une carte de présence selon l'invention,
- la figure 6 présente le procédé de transmission de carte de présence de terminaux mobiles et le procédé d'application d'une règle de traitement de session à au moins un terminal mobile, selon un premier mode de réalisation de l'invention,
- la figure 7 présente le procédé de transmission de carte de présence de terminaux mobiles et le procédé d'application d'une règle de traitement de session à au moins un terminal mobile, selon un deuxième mode de réalisation de l'invention,
- la figure 8 présente la structure d'un dispositif de transmission de carte de présence selon l'invention,
- la figure 9 présente la structure d'un dispositif d'application d'une règle de traitement de session selon l'invention.

### 5. Description détaillée d'au moins un mode de réalisation de l'invention

Dans la suite de la description, on considère à titre d'exemple de réalisation de l'invention un réseau EPC (Evolved Packet Core en anglais, ou coeur paquet évolué) selon les normes 3GPP à partir de la version 8. Bien sûr, l'invention peut être réalisée dans le cadre d'autres normes.

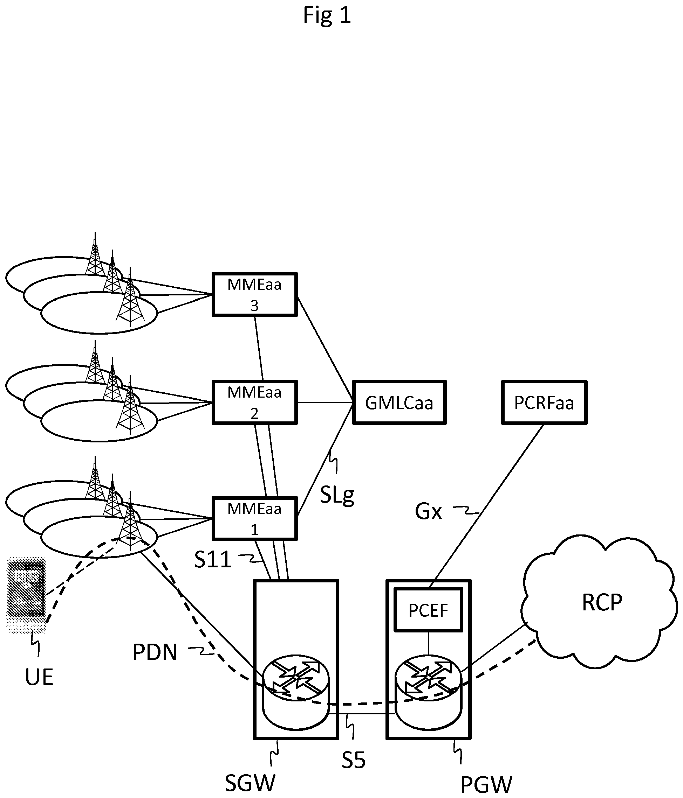

La **figure 1** présente l'architecture d'un réseau mobile selon la technique antérieure.

L'équipement de gestion PCRF (PCRFaa) collecte depuis plusieurs sources des informations liées aux réseaux (type d'accès radio, adresses de passerelles, localisation du terminal du client, etc.), des informations liées à l'abonnement du client, et des informations liées aux applications utilisées par le client sur son terminal (type d'application, type de media, etc.).

Les équipements de gestion MME (MMEaa1, MMEaa2 et MMEaa3) sont des entités du plan de contrôle (signalisation) du réseau dont le but est de gérer les procédures de mobilité (signalisation entre les noeuds du réseau coeur pour la mobilité) dans un certain nombre de zones de localisation.

La passerelle SGW (Serving Gateway en anglais, ou passerelle de service) assure entre autres l'ancrage du média lorsque le terminal UE (User Equipement en anglais, ou équipement d'utilisateur) change de point d'accès radio en cours de session, des fonctionnalités de comptage et la bufferisation du média à destination de l'utilisateur final lorsque la connectivité radio n'est pas encore établie ou interrompue. Plusieurs SGW peuvent être gérées par un MMEaa.

La passerelle PGW (Packet Data Network Gateway en anglais, ou passerelle de réseau de données en mode paquet) établit la connexion PDN (Packet Data Network en anglais, ou réseau de données en mode paquet) entre le terminal UE et le réseau de commutation par paquets RCP en fournissant la connectivité IP (Internet Protocol en anglais) aux utilisateurs finaux (attribution d'adresse IP). Il embarque une fonction PCEF (Policy and Charging Enforcement Function en anglais, ou fonction d'application de politique et de comptage) dont le rôle est d'assurer des fonctionnalités de comptage, d'application de politiques avancées de qualité de service, sous contrôle du PCRFaa. Une PGW est connectée à plusieurs SGW.

Lors de la procédure d'ouverture d'une session de connectivité IP ("IP CAN session") portée par la connexion PDN, la PCEF ouvre une session de commande associée vers le PCRFaa et lui communique des informations associées à cette session de connectivité (par exemple le type d'accès radio). En fonction de ces caractéristiques et d'autres informations provenant de plusieurs autres sources, le PCRFaa détermine la politique (qualité de service, la tarification à mettre en place, autorisation d'accès) à appliquer pour les différents services transportés par la session de connectivité IP en cours. Cette politique peut être modifiée si des événements paramétrables par l'opérateur se produisent durant la session, par exemple si la localisation du terminal UE change.

Lorsque cette localisation change, les messages de signalisation échangés au travers des interfaces S11 et S5 entre, dans l'ordre, le MMEaa, la SGW et la PGW pour la gestion de la session de connectivité (création, modification, fermeture) indiquent la localisation de l'utilisateur selon le niveau de granularité nécessaire. Ainsi, la PCEF peut remonter en temps réel le changement de localisation de l'utilisateur au PCRFaa via la session de contrôle associée à la session de connectivité et l'interface Gx. Le PCRFaa peut alors, en fonction de sa configuration, décider d'une modification de QoS (e.g. bande passante) ou de tarification selon la localisation de l'utilisateur.

En plus des entités citées ci-dessus, la spécification TS 23.271 de la norme 3GPP spécifie un équipement central de localisation de terminaux mobiles GMLCaa, qui est une entité ayant accès à toutes les entités MMEaa au travers des interfaces SLg. Le GMLCaa a pour fonction de récupérer les informations de localisation des utilisateurs en temps réel des différents MMEaa instanciés dans le réseau de l'opérateur. Malgré le GMLCaa, le PCRFaa doit obtenir les informations qui lui sont nécessaires des différentes entités MMEaa, de façon indirecte en passant par les équipements du plan de transfert tels que des PGW et des SGW.

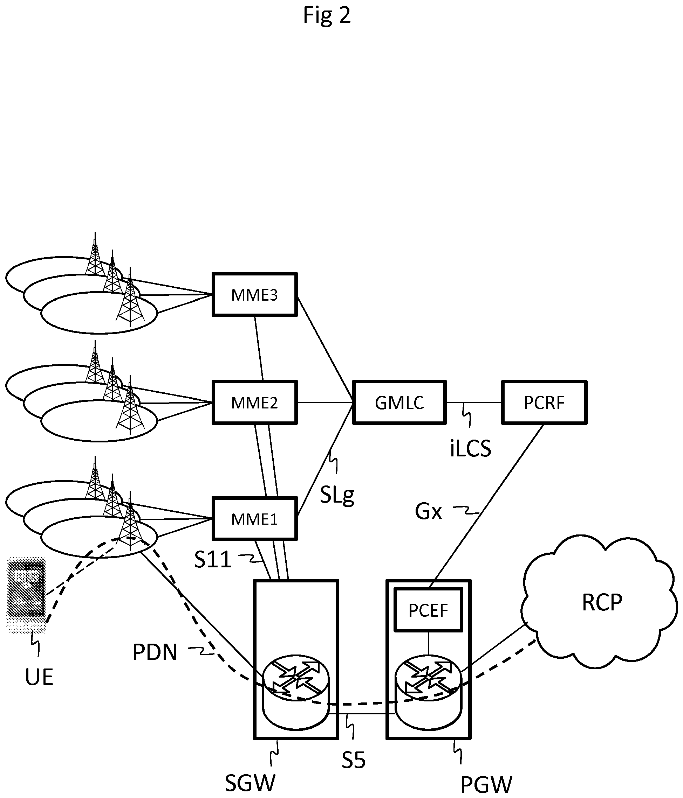

La **figure 2** présente l'architecture d'un réseau mobile selon l'invention.

Selon l'invention, le PCRF peut collecter directement auprès du GMLC les informations de localisation dont il a besoin au travers d'une interface iLCS dite client/serveur LCS (Location Control Service, ou service de contrôle de localisation, en anglais), en prenant le rôle de client LCS. L'interrogation d'un GMLC, ou d'un MME, peut se faire sur la base d'une zone ou d'un groupe de zones afin d'obtenir en retour une liste de terminaux présents dans cette zone ou dans chacune des zones de ce groupe. Les identifiants de zone utilisés dans l'interrogation peuvent être de tous types, y compris LAI (Location Area Identity en anglais, ou identité de zone de localisation) ou TAI (Tracking Area Identity en anglais, ou identité de zone de recherche).

Dans la suite, on désigne par "information zonale" le groupe de zones sur la base desquelles le PCRF interroge le GMLC, et par "carte de présence" la liste obtenue en réponse par le PCRF.

Ce nouveau mode d'interrogation du GMLC ou du MME permet ou facilite diverses applications dépendantes de la localisation, impossibles ou plus difficiles à mettre en oeuvre selon la technique antérieure. En plus de permettre de gérer plus finement l'application d'une règle de traitement de session aux terminaux, il permet par exemple d'émettre des messages publicitaires de type sms (short messaging service en anglais, ou service de messages courts) correspondant à des commerces locaux. D'autres exemples d'applications sont, en cas de congestion dans une zone de localisation, de réduire la bande passante des terminaux se trouvant dans cette zone, ou alors, en cas d'événement imprévu (accident, attentat) dans une zone, de prévenir par sms les utilisateurs des zones avoisinantes, pour les empêcher d'entrer dans la zone concernée et ainsi assister les services de sécurité publique.

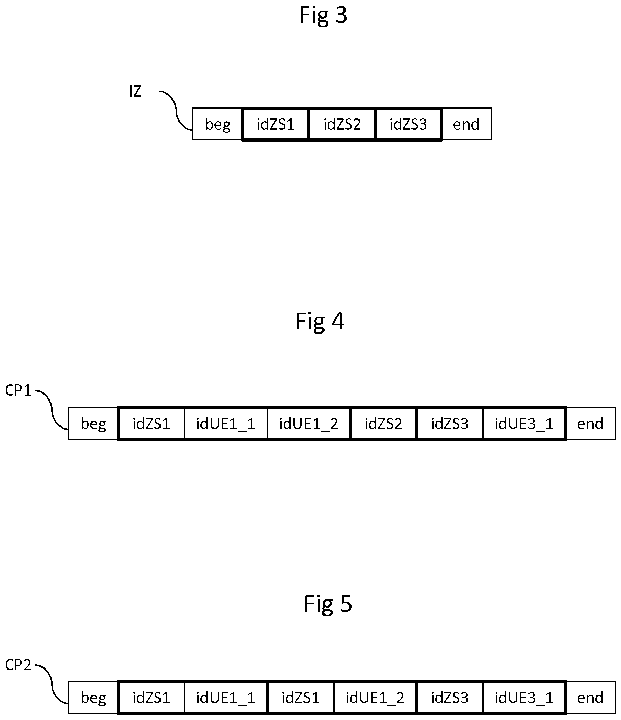

La **figure 3** présente la structure d'une information zonale selon l'invention. Dans cet exemple, trois zones sont concernées, les zones dont les identifiants sont idZS1, idZS2 et idSZ3. L'information zonale comprend au moins trois champs contenant chacun l'identifiant d'une zone. Les champs beg et end permettent, par exemple, d'identifier que la structure est celle d'une information zonale, que le nombre d'identifiants de zones est trois, et de vérifier l'absence d'erreur de décodage à la réception de l'information zonale.

On voit que l'information zonale ne contient pas de champ relatif à une règle de traitement de session, car selon l'invention, seul le PCRF doit être capable de distinguer entre les règles. Pour un équipement recevant l'information zonale du PCRF, comme le GMLC, il est seulement nécessaire d'identifier à quelles zones sont associées une règle, quelle que soit la règle. La structure de l'information zonale exploite donc avantageusement cette propriété pour réduire au minimum la taille de l'information zonale ainsi que la complexité du procédé traitant l'information zonale.

La **figure 4** présente la structure d'une carte de présence selon l'invention. Cette structure indique pour chacune des zones de l'information zonale, une liste de terminaux qu'elle contient. La figure illustre l'exemple où deux terminaux, dont les identifiants sont idUE1_1 et idUE1_2, se trouvent dans la zone idZS1, aucun terminal ne se trouve dans la zone idZS2, et un terminal, dont l'identifiant est idUE3_1, se trouve dans la zone idZS3. Les champs beg et end ont la même fonction que dans la structure d'une information zonale.

On voit qu'avec cette structure la carte de présence comprend au moins autant de champs qu'il existe de zones dans l'information zonale, mais ne réplique pas les champs de zone lorsque plusieurs terminaux s'y trouvent. Cette structure est particulièrement avantageuse lorsqu'un grand nombre de terminaux se trouvent dans chacune des zones.

La **figure 5** présente une variante de la structure d'une carte de présence selon l'invention. Dans cette variante, la structure indique, pour chacun des terminaux présents dans une des zones de l'information zonale, le couple {zone; terminal}. La figure illustre le même exemple que pour la figure 4. Les champs beg et end ont la même fonction que dans la structure d'une information zonale.

On voit qu'avec cette variante, la carte de présence comprend au moins autant de champs que le double du nombre de terminaux présents dans une des zones de l'information zonale, mais ne contient aucun champ correspondant à une zone de l'information zonale qui est sans terminal. Cette variante de structure est avantageuse lorsque les zones de l'information zonale ne contiennent que peu, ou pas, de terminaux.

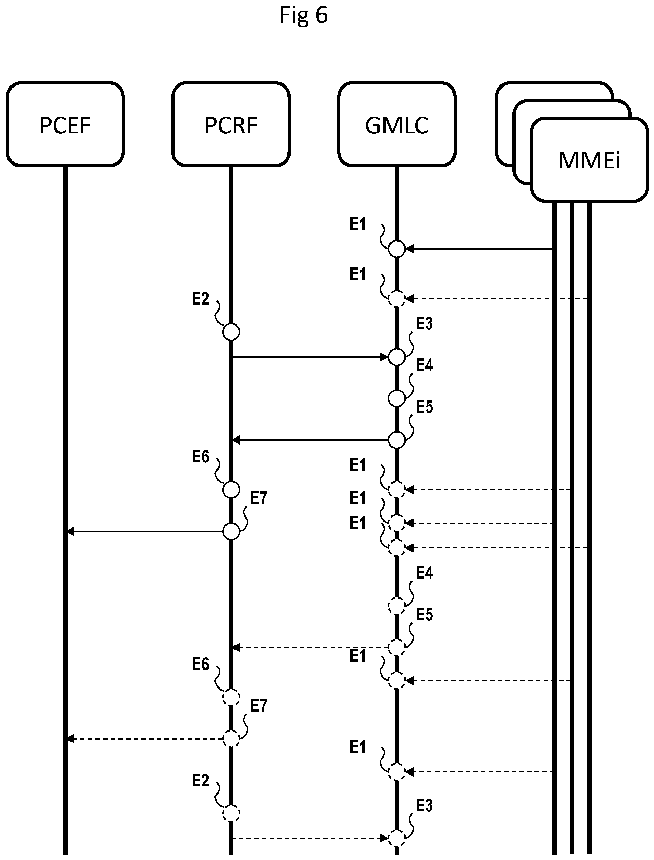

La **figure 6** présente le procédé de transmission de carte de présence de terminaux mobiles et le procédé d'application d'une règle de traitement de session à au moins un terminal mobile, selon un premier mode de réalisation de l'invention. Selon ce mode de réalisation, le procédé de transmission de carte de présence est mis en oeuvre par l'équipement de gestion GMLC, et le procédé d'application d'une règle de traitement de session par l'équipement de gestion PCRF.

Dans ce mode de réalisation, la surveillance des changements de localisation des terminaux est effectuée globalement par le GMLC pour tous les terminaux à la fois. Le GMLC émet vers le PCRF, à intervalles réguliers, une carte de présence des terminaux, ce qui permet de réduire la signalisation liée aux changements de localisation des terminaux, entre le GMLC the le PCRF.

Il peut être nécessaire, lors d'une étape E0, non illustrée dans la figure, que les MMEi soient pré-configurés pour transmettre au GMLC les informations de localisation.

Lors d'une étape E1, le GMLC obtient d'un des MMEi qu'il gère une information de localisation d'un terminal. Cette étape survient de façon répétée et à une fréquence rapprochée mais aléatoire, de l'ordre de plusieurs dizaines, centaines ou milliers de fois par seconde selon la taille du réseau, en fonction des mouvements des terminaux dans les zones de localisation gérées par les MMEi. La première instanciation de cette étape est illustrée à l'aide d'un trait plein dans la figure, les autres à l'aide d'un trait pointillé.

Le message de l'étape E1 peut se matérialiser sous forme d'un message de type "subscriber location report" selon la norme 3GPP TS 29.172, dont la réception peut être accusée par un message de type "subscriber location report ack", non représenté dans la figure, selon la même norme.

Lors d'une étape E2, le PCRF détermine l'information zonale, qui est une liste de zones spéciales de localisation qui doivent faire l'objet d'un traitement spécial, puis, lors d'une étape E3, le GMLC obtient cette information zonale du PCRF.

Le traitement spécial est par exemple une baisse de la tarification, ou une augmentation de la bande passante, pour chacun des terminaux se trouvant dans une des zones de la liste spéciale. Les zones concernées ainsi que les traitements spéciaux associés sont déterminés par la politique commerciale de l'opérateur du réseau. La liste peut contenir toutes les zones, une seule zone, plusieurs zones ou aucune des zones de localisation de l'opérateur. L'étape E2 de détermination de la liste de zones spéciales et l'étape E3 d'obtention de cette liste ont donc lieu de façon répétée mais pas nécessairement régulièrement, par exemple chaque fois que la politique commerciale de l'opérateur change, de l'ordre d'une fois ou deux par jour. La première instanciation de ces étapes est illustrée à l'aide d'un trait plein dans la figure, les autres à l'aide d'un trait pointillé.

Le message de l'étape E3 peut se matérialiser sous forme d'un message de type "triggered location reporting request" selon une modification de la norme OMA MLP (Open Mobile Alliance en anglais, ou alliance ouverte pour les mobiles ; Mobile Location Protocol en anglais, ou protocole de localisation de mobiles). Cette modification permet à un PCRF de "s'abonner" auprès d'un GMLC afin de recevoir à intervalles de temps réguliers la liste de terminaux présents dans une liste de zones transmise dans le message. Les identifiants de zone utilisés dans l'information zonale peuvent utiliser un système de codification différent de celui des informations de localisation. Par exemple les identifiants de zone utilisés dans l'information zonale sont des LAI ou des TAI, et les identifiants utilisés dans les informations de localisation que le GMLC reçoit sont des Cell Id. Dans ce cas le GMLC doit procéder à une traduction entre LAI/TAI et Cell Id.

Lors d'une étape E4, à l'aide des informations de localisation reçues lors d'étapes E1 et de l'information zonale reçue lors d'une étape E3, le GMLC détermine la carte de présence des terminaux, c'est-à-dire la liste des terminaux se trouvant à l'instant de cette étape dans une zone spéciale quelconque de l'information zonale reçue du PCRF lors de l'étape E3.

Lors d'une étape E5, le GMLC émet la carte de présence des terminaux vers le PCRF.

Le message de l'étape E5 peut se matérialiser sous forme d'un message de type "triggered location report" selon une modification de la norme OMA MLP.

Lors d'une étape E6, à l'aide de la carte de présence des terminaux émise par le GMLC, et en la comparant éventuellement avec une précédente version de la carte, le PCRF sélectionne des terminaux dont la règle de traitement de session telle qu'appliquée doit être changée (traitement de la qualité de service, de la tarification), soit parce qu'ils sont entrés dans une des zones de la liste spéciale, soit parce qu'ils en sont sortis.

Lors d'une étape E7, le PCRF transmet à la PCEF de nouveaux paramètres associés à la règle de traitement de session à appliqueraux terminaux concernés, afin que les règles de traitement de session appliquées correspondent bien aux localisations nouvelles des terminaux.

Les étapes E4 de détermination de la carte de présence des terminaux, E5 d'émission de la carte, E6 de sélection des terminaux, et E7 de transmission des nouveaux paramètres, peuvent être répétées régulièrement à une fréquence de l'ordre de la seconde, afin de permettre au PCRF d'appliquer la politique commerciale de l'opérateur avec une précision approchant la seconde. La première instanciation de ces étapes est illustrée à l'aide d'un trait plein dans la figure, les autres à l'aide d'un trait pointillé.

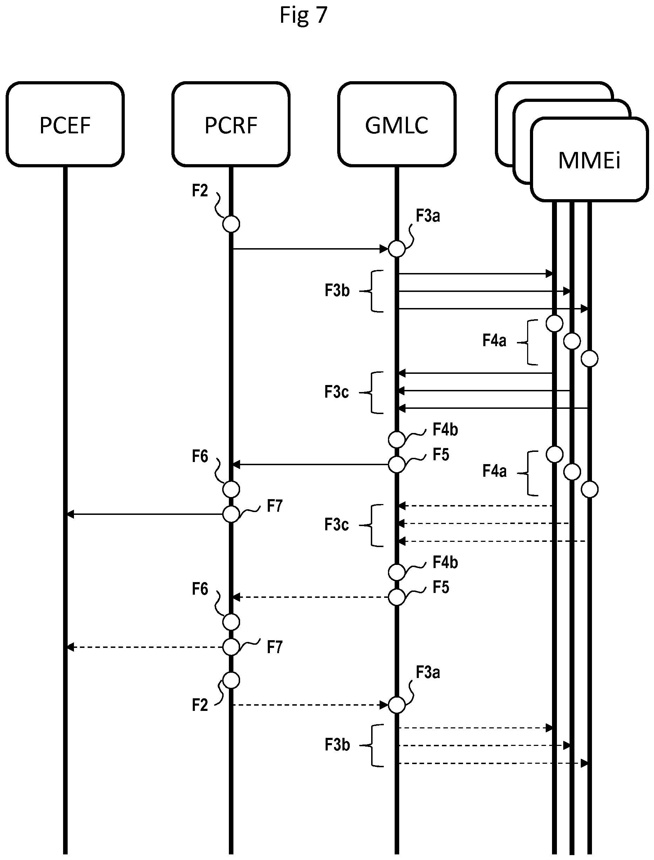

La **figure 7** présente le procédé de transmission de carte de présence de terminaux mobiles et le procédé d'application d'une règle de traitement de session à au moins un terminal mobile, selon un deuxième mode de réalisation de l'invention. Selon ce mode de réalisation, le procédé de transmission de carte de présence est mis en oeuvre par les équipements MMEi, et le procédé d'application d'une règle de traitement de session par l'équipement de gestion PCRF.

A la différence du premier mode de réalisation, dans ce deuxième mode de réalisation le GMLC partage avec les MMEi la tâche de surveillance des changements de localisation des terminaux. Le GMLC transfère aux MMEi la liste des zones spéciales. Les MMEi, couvrant chacun un groupe de zones, renvoient chacun une carte de présence des terminaux au GMLC. Le GMLC transfère au PCRF les cartes de présence des terminaux au PCRF, séparément ou fusionnées en une seule carte. Cela permet non seulement de réduire la signalisation liée aux changements de localisation des terminaux entre le GMLC et le PCRF, mais aussi entre les MMEi et le GMLC.

Lors d'étapes F1 non illustrées dans la figure, les MMEi reçoivent une information de localisation d'un terminal. Ces étapes surviennent de façon répétée et à une fréquence rapprochée mais aléatoire, de l'ordre de plusieurs dizaines, centaines ou milliers de fois par seconde selon la taille du réseau, en fonction des mouvements des terminaux dans les zones de localisation gérées par les MMEi.

Lors d'une étape F2 identique à l'étape E2 du premier mode de réalisation, le PCRF détermine l'information zonale, qui est une liste de zones spéciales de localisation qui doivent faire l'objet d'un traitement spécial, puis, lors d'une étape F3a identique à l'étape E3 du premier mode de réalisation, le GMLC obtient cette information zonale du PCRF.

Lors d'une étape F3b, le GMLC transmet la liste de zones spéciales comprise dans l'information zonale à chacun des MMEi qu'il gère.

Les messages de l'étape F3b peuvent se matérialiser sous forme de messages de type "subscriber location subscription" selon une modification de la norme 3GPP TS 29.172. Cette modification implique l'ajout d'un nouveau type de message entre GMLC et MMEi permettant à un GMLC de "s'abonner" auprès d'un MMEi afin de recevoir à intervalles de temps réguliers la liste de terminaux présents dans une liste de zones transmise dans le message. Les identifiants de zone utilisés dans l'information zonale peuvent utiliser un système de codification différent de celui des informations de localisation. Par exemple les identifiants de zone utilisés dans l'information zonale sont des LAI ou des TAI, et les identifiants utilisés dans les informations de localisation que les MMEi reçoivent sont des Cell Id. Dans ce cas les MMEi doivent procéder à une traduction entre LAI/TAI et Cell Id.

L'étape F2 de détermination de la liste de zones spéciales, l'étape F3a d'obtention de cette liste ainsi que l'étape F3b de transmission de cette liste ont lieu de façon répétée mais pas nécessairement régulièrement, par exemple chaque fois que la politique commerciale de l'opérateur change, de l'ordre d'une fois ou deux par jour. La première instanciation de ces étapes est illustrée à l'aide d'un trait plein dans la figure, les autres à l'aide d'un trait pointillé.

Lors d'une étape F4a, à l'aide des informations de localisation reçues lors d'étapes F1 et de l'information zonale reçue lors d'une étape F3b, chacun des MMEi détermine sa carte de présence des terminaux, c'est-à-dire la liste des terminaux se trouvant à l'instant de cette étape dans une zone spéciale quelconque mais couverte par ce MMEi.

Lors d'une étape F3c, le GMLC reçoit de chacun des MMEi une carte de présence des terminaux.

Les messages de l'étape F3c peuvent se matérialiser sous forme de messages de type "subscriber location report" selon une modification de la norme 3GPP TS 29.172, permettant de véhiculer une liste de couples {terminal; zone de localisation}, plutôt qu'un seul couple. La réception des messages de l'étape F3c par le GMLC peut être accusée par des messages de type "subscriber location report ack", non représentés dans la figure, selon la même norme.

Lors d'une étape F4b, le GMLC fusionne les cartes de présence des terminaux reçues des MMEi en une seule carte, représentant la liste des terminaux présents dans toutes les zones spéciales comprises dans la dernière information zonale reçue du PCRF lors de l'étape F3a.

Les étapes F5, F6 et F7 sont identiques respectivement aux étapes E5, E6 et E7 du premier mode de réalisation.

Les étapes F4a de détermination des cartes de présence des terminaux, F3c d'obtention des cartes de présence, F4b de fusion des cartes de présence en une seule carte, F5 d'émission de cette carte, F6 de sélection des terminaux, et F7 de transmission des nouveaux paramètres, peuvent être répétées régulièrement à une fréquence de l'ordre de la seconde, afin de permettre au PCRF d'appliquer la politique commerciale de l'opérateur avec une précision approchant la seconde. La première instanciation de ces étapes est illustrée à l'aide d'un trait plein dans la figure, les autres à l'aide d'un trait pointillé.

Dans une variante non illustrée des étapes F4b et F5, le GMLC ne fusionne pas les cartes de présence, mais les émet une par une, en respectant le format attendu par le PCRF.

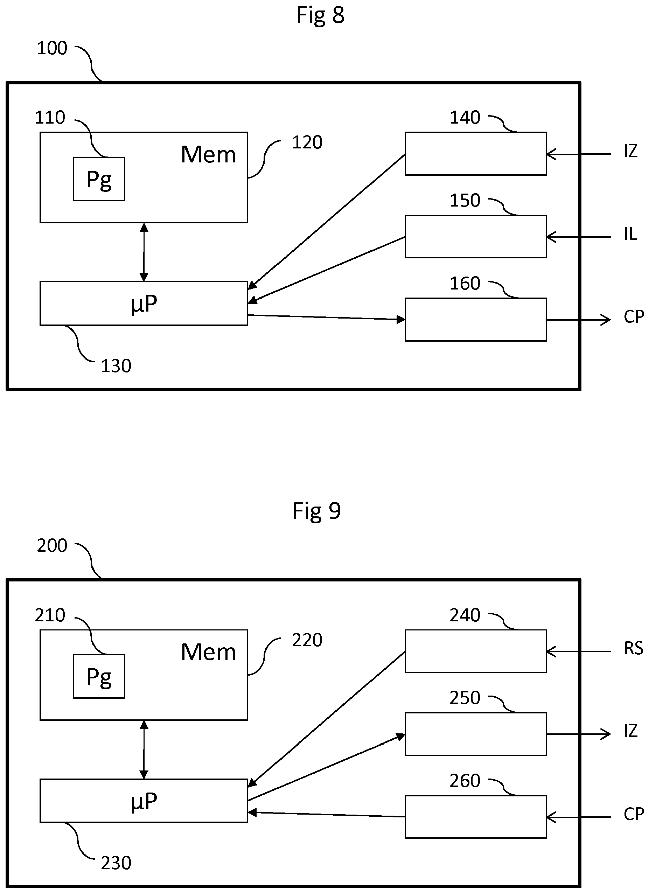

En relation avec la **figure 8****,** on présente maintenant la structure d'un dispositif 100 de transmission de carte de présence selon l'invention.

Un tel dispositif 100 comprend :
- un module de réception 140, apte à recevoir une information zonale (IZ), représentative d'un identifiant de zone spéciale de localisation,
- un module de réception 150, apte à recevoir une information de localisation de terminal (IL), comprenant un identifiant de zone de localisation,
- un module d'émission 160, apte à émettre une carte de présence de terminaux (CP), représentative d'un identifiant de terminal, et pour ladite au moins une information d'identifiant de terminal, une information d'identifiant de zone de localisation dans laquelle se trouve le terminal.

L'information zonale et l'information de localisation de terminal sont traitées par une unité de traitement 130 équipée d'un microprocesseur apte à mettre en oeuvre les moyens constitutifs de l'invention tels que décrits précédemment, en particulier, des moyens de recherche de zone de localisation dans l'information zonale, et de mise à jour de la carte de présence.

Le dispositif 100 selon l'invention comprend en outre une mémoire 120 dans laquelle est stockée un programme d'ordinateur 110 mettant en oeuvre les étapes du procédé de transmission de carte de présence. A l'initialisation, les instructions de code du programme d'ordinateur 110 sont par exemple chargées dans une mémoire RAM, avant d'être exécutées par le processeur de l'unité de traitement 130.

En relation avec la **figure 9****,** on présente maintenant la structure d'un dispositif 200 d'application d'une règle de traitement de session selon l'invention.

Un tel dispositif 200 comprend :
- un module de réception 240, apte à recevoir au moins une règle spéciale de traitement de session associée à au moins une zone de localisation (RA),
- un module d'émission 250, apte à émettre une information zonale (IZ), représentative d'un identifiant de zone spéciale de localisation,
- un module de réception 260, apte à recevoir une carte de présence de terminaux (CP), représentative d'un identifiant de terminal, et pour ladite au moins une information d'identifiant de terminal, une information d'identifiant de zone de localisation dans laquelle se trouve le terminal.

La règle spéciale de traitement de session et la carte de présence sont traitées par une unité de traitement 230 équipée d'un microprocesseur apte à mettre en oeuvre les moyens constitutifs de l'invention tels que décrits précédemment, en particulier, des moyens d'identification de règle de traitement de session à partir d'identifiant de zone de localisation, des moyens de comparaison entre règles, et des moyens d'application d'une règle de traitement de session selon une règle.

Le dispositif 200 selon l'invention comprend en outre une mémoire 220 dans laquelle est stockée un programme d'ordinateur 210 mettant en oeuvre les étapes du procédé d'application d'une règle de traitement de session. A l'initialisation, les instructions de code du programme d'ordinateur 210 sont par exemple chargées dans une mémoire RAM, avant d'être exécutées par le processeur de l'unité de traitement 230.

Les exemples de réalisation de l'invention qui viennent d'être présentés ne sont que quelques uns des modes de réalisation envisageables. Ils montrent que l'invention permet de corréler la signalisation relative aux changements de localisation des terminaux avec le besoin de changer la règle de traitement de session qui leur est appliquée, et ainsi de fortement diminuer le volume de la signalisation générée relative aux changements de localisation des terminaux.

## Revendications

1. **Procédé de transmission de carte de présence** de terminaux mobiles connectés par une session de communication à un réseau mobile couvrant une pluralité de zones de localisation, mis en oeuvre par un équipement (GMLC, MMEi) du réseau mobile apte à collecter des informations de localisation de terminaux mobiles,
**le procédé étant caractérisé en ce qu'**il comprend :
- une étape préalable (E3, F3b) d'obtention d'une information dite zonale (IZ), en provenance d'un équipement (PCRF) du réseau mobile apte à appliquer une règle de traitement de session à un terminal en fonction d'au moins sa zone de localisation, l'information zonale comprenant au moins une information relative à l'existence d'au moins une zone de la pluralité de zones de localisation, dite zone spéciale, à laquelle est associée une règle spéciale de traitement de session,
- au moins une étape itérative de mise à jour d'une carte de présence (CP1, CP2) associant des identifiants de zone de localisation à des identifiants de terminal, l'étape comprenant les étapes suivantes:
∘ collecte (E1) d'une information de localisation d'un terminal (UE), comprenant un identifiant de zone de localisation de ce terminal,
∘ recherche (E4, F4a), dans l'information zonale, s'il existe une zone spéciale correspondant à l'identifiant de ladite zone de localisation, et,
∘ lorsque la zone spéciale existe, ajout (E4, F4a) de l'identifiant du terminal et de l'identifiant de la zone de localisation à la carte de présence de terminaux,
- et une étape (E5, F3c) de transmission de la carte de présence (CP1, CP2) de terminaux vers l'équipement (PCRF) du réseau mobile apte à appliquer une règle de traitement de session à un terminal en fonction d'au moins sa zone de localisation.

2. **Procédé de transmission de carte de présence** selon la revendication 1 **caractérisé en ce que** la première étape (E1) de collecte d'une information de localisation d'un terminal est précédée d'une étape d'émission d'une requête d'abonnement aux informations de localisation de terminaux.

3. **Procédé de transmission de carte de présence** selon la revendication 1 **caractérisé en ce que** l'information zonale (IZ) comprend un élément appartenant au groupe comprenant:
- aucun identifiant de zone spéciale,
- au moins un identifiant de zone spéciale.

4. **Procédé de transmission de carte de présence** selon la revendication 1 **caractérisé en ce que** l'étape (E5, F3c) de transmission de la carte de présence (CP1, CP2) est périodique, la durée de la période étant comprise dans l'information zonale (IZ).

5. **Procédé de transmission de carte de présence** selon la revendication 1 **caractérisé en ce que** l'étape préalable (E3, F3b) d'obtention d'une information zonale (IZ) est suivie d'une étape de suppression, dans la carte de présence (CP1, CP2), des identifiants de zone de localisation absents de l'information zonale, et des identifiants de terminaux correspondants présents dans ces zones.

6. **Procédé d'application d'une règle de traitement de session** à au moins un terminal mobile (UE) connecté par une session de communication à un réseau mobile couvrant une pluralité de zones de localisation, comprenant une étape préalable d'obtention d'un ensemble de règles de traitement de session associées à un sous-ensemble de la pluralité de zones, le procédé étant mis en oeuvre par un équipement (PCRF) du réseau mobile apte à appliquer une règle de traitement de session à un terminal en fonction d'au moins sa zone de localisation,
**le procédé étant caractérisé en ce qu'**il comprend :
- une étape préalable d'émission d'une information dite zonale (IZ), à destination d'un équipement (GMLC, MMEi) du réseau mobile apte à collecter des informations de localisation de terminaux mobiles, l'information zonale comprenant au moins une information relative à l'existence d'au moins une zone de la pluralité de zones de localisation, dite zone spéciale, à laquelle est associée une règle spéciale de traitement de session,
- une étape d'obtention d'une carte de présence (CP1, CP2) de terminaux, associant des identifiants de zone spéciale à des identifiants de terminal, en provenance de l'équipement (GMLC, MMEi) du réseau mobile apte à collecter des informations de localisation de terminaux mobiles,
- lorsqu'au moins un identifiant de terminal est compris dans la carte de présence (CP1, CP2), les étapes suivantes:
∘ identification de la règle de traitement de session associée à la zone de localisation du terminal telle qu'indiquée dans la carte de présence (CP1, CP2),
∘ obtention d'une règle de traitement de session préalablement appliquée audit au moins un terminal, et
∘ comparaison des deux règles,
- lorsque la règle identifiée et la règle préalablement appliquée sont différentes, une étape (E6, E7) d'application de la règle identifiée audit au moins un terminal (UE).

7. **Procédé d'application d'une règle de traitement de session** selon la revendication 6, **caractérisé en ce que** la règle de traitement de session préalablement appliquée est identifiée par la recherche, dans une autre carte de présence (CP1, CP2) préalablement obtenue, de l'identifiant de l'au moins un terminal et de sa zone de localisation, puis par l'identification de la règle correspondant à cette zone de localisation.

8. **Procédé d'application d'une règle de traitement de session** selon la revendication 6, **caractérisé en ce que** l'étape d'obtention de la carte de présence (CP1, CP2) de terminaux est suivie d'une étape d'application d'une règle de traitement de session à l'au moins un terminal selon une règle prédéterminée, lorsqu'un identifiant du terminal est compris dans une carte de présence préalablement obtenue, et n'est pas compris dans la carte de présence (CP1, CP2).

9. **Dispositif** (100) **de transmission de carte de présence** de terminaux mobiles connectés par une session de communication à un réseau mobile couvrant une pluralité de zones de localisation, mis en oeuvre par un équipement (GMLC, MMEi) du réseau mobile apte à collecter des informations de localisation de terminaux mobiles, **le dispositif étant caractérisé en ce qu'**il comprend :
- des moyens (140) d'obtention préalable d'une information dite zonale (IZ), comprenant au moins une information relative à l'existence d'au moins une zone de la pluralité de zones de localisation, dite zone spéciale, à laquelle est associée une règle spéciale de traitement de session,
- des moyens de mise à jour itérative d'une carte de présence (CP, CP1, CP2) associant des identifiants de zone de localisation à des identifiants de terminal, les moyens comprenant les moyens suivants:
∘ collecte (150) d'une information de localisation d'un terminal, comprenant un identifiant de zone de localisation de ce terminal,
∘ recherche, dans l'information zonale (IZ), s'il existe une zone spéciale correspondant à l'identifiant de ladite zone de localisation, et,
∘ lorsque la zone spéciale existe, ajout de l'identifiant du terminal et de l'identifiant de la zone de localisation à la carte de présence de terminaux (CP, CP1, CP2),
- et des moyens (160) de transmission de la carte de présence de terminaux vers un équipement (PCRF) du réseau mobile apte à appliquer une règle de traitement de session à un terminal en fonction d'au moins sa zone de localisation.

10. **Dispositif** (200) **d'application d'une règle de traitement de session** à au moins un terminal mobile connecté par une session de communication à un réseau mobile couvrant une pluralité de zones de localisation, comprenant des moyens (240) d'obtention préalable d'un ensemble (RS) de règles de traitement de session associées à un sous-ensemble de la pluralité de zones,
**le dispositif étant caractérisé en ce qu'**il comprend :
- des moyens (250) d'émission préalable d'une information dite zonale (IZ), comprenant au moins une information relative à l'existence d'au moins une zone de la pluralité de zones de localisation, dite zone spéciale, à laquelle est associée une règle spéciale de traitement de session,
- des moyens (260) d'obtention d'une carte de présence de terminaux (CP, CP1, CP2), associant des identifiants de zone spéciale à des identifiants de terminal,
- lorsqu'au moins un identifiant de terminal est compris dans la carte de présence, les moyens suivants:
∘ identification de la règle de traitement de session associée à la zone de localisation du terminal telle qu'indiquée dans la carte de présence,
∘ obtention d'une règle de traitement de session préalablement appliquée audit au moins un terminal, et
∘ comparaison des deux règles,
- lorsque la règle identifiée et la règle préalablement appliquée sont différentes, des moyens d'application de la règle identifiée audit au moins un terminal.

11. **Equipement** (GMLC, MMEi) d'un réseau de communication, apte à collecter des informations de localisation de terminaux mobiles, **caractérisé en ce qu'**il comprend un dispositif (100) de transmission de carte de présence selon la revendication 9.

12. **Equipement** (PCRF) d'un réseau de communication, apte à appliquer une règle de traitement de session à un terminal en fonction de sa zone de localisation et d'au moins une règle, **caractérisé en ce qu'**il comprend un dispositif (200) d'application d'une règle de traitement de session selon la revendication 10.

13. **Système** de signalisation de présence de terminaux **caractérisé en ce qu'**il comprend un équipement (PCRF) selon la revendication 12 et au moins un équipement (GMLC, MMEi) selon la revendication 11.

14. **Programme d'ordinateur caractérisé en ce qu'**il comprend des instructions pour la mise en oeuvre d'un procédé de transmission de carte de présence selon la revendication 1, lorsque ce programme est exécuté par un processeur.

15. **Programme d'ordinateur caractérisé en ce qu'**il comprend des instructions pour la mise en oeuvre d'un procédé d'application d'une règle de traitement de session selon la revendication 6, lorsque ce programme est exécuté par un processeur.

## Patentansprüche

1. Verfahren zum Übertragen einer Präsenzkarte von mobilen Endgeräten, die über eine Kommunikationssitzung mit einem mobilen Netzwerk verbunden sind, das mehrere Lokalisierungszonen abdeckt, umgesetzt durch ein Gerät (GMLC, MMEi) des mobilen Netzwerks, das Lokalisierungsinformationen von mobilen Endgeräten sammeln kann, wobei das Verfahren **dadurch gekennzeichnet ist, dass** es Folgendes umfasst:
- einen vorausgehenden Schritt (E3, F3b) zum Erhalten einer sogenannten Zoneninformation (IZ) von einem Gerät (PCRF) des mobilen Netzwerks, das eine Sitzungsverarbeitungsregel auf ein Endgerät in Abhängigkeit von mindestens seiner Lokalisierungszone anwenden kann, wobei die Zoneninformation mindestens eine Information bezüglich des Vorhandenseins von mindestens einer Zone aus den mehreren Lokalisierungszonen umfasst, genannt Spezialzone, der eine spezielle Sitzungsverarbeitungsregel zugeordnet wird,
- mindestens einen iterativen Schritt zum Aktualisieren einer Präsenzkarte (CP1, CP2), die Lokalisierungszonen-Kennungen zu Endgerät-Kennungen zuordnet, wobei der Schritt die folgenden Schritte umfasst:
∘ Sammeln (E1) einer Lokalisierungsinformation eines Endgeräts (UE), die eine Lokalisierungszonen-Kennung dieses Endgeräts umfasst,
∘ Suchen (E4, F4a) in der Zoneninformation, ob eine Spezialzone vorhanden ist, die der Kennung der Lokalisierungszone entspricht, und,
∘ wenn die Spezialzone vorhanden ist, Hinzufügen (E4, F4a) der Kennung des Endgeräts und der Kennung der Lokalisierungszone zur Endgeräte-Präsenzkarte,
- und einen Schritt (E5, F3c) zum Übertragen der Endgeräte-Präsenzkarte (CP1, CP2) auf das Gerät (PCRF) des mobilen Netzwerks, das eine Sitzungsverarbeitungsregel auf ein Endgerät in Abhängigkeit von mindestens seiner Lokalisierungszone anwenden kann.

2. Verfahren zum Übertragen einer Präsenzkarte nach Anspruch 1, **dadurch gekennzeichnet, dass** der erste Schritt (E1) des Sammelns einer Lokalisierungsinformation eines Endgeräts nach einem Schritt zum Senden einer Abonnementsanfrage für die Lokalisierungsinformationen von Endgeräten erfolgt.

3. Verfahren zum Übertragen einer Präsenzkarte nach Anspruch 1, **dadurch gekennzeichnet, dass** die Zoneninformation (IZ) ein Element umfasst, das zur Gruppe gehört, die Folgendes umfasst:
- keine Spezialzonen-Kennung,
- mindestens eine Spezialzonen-Kennung.

4. Verfahren zum Übertragen einer Präsenzkarte nach Anspruch 1, **dadurch gekennzeichnet, dass** der Schritt (E5, F3c) zum Übertragen der Präsenzkarte (CP1, CP2) periodisch ist, wobei die Dauer der Periode in der Zoneninformation (IZ) enthalten ist.

5. Verfahren zum Übertragen einer Präsenzkarte nach Anspruch 1, **dadurch gekennzeichnet, dass** der vorausgehende Schritt (E3, F3b) zum Erhalten einer Zoneninformation (IZ) gefolgt wird von einem Schritt zum Löschen, in der Präsenzkarte (CP1, CP2), der bei der Zoneninformation fehlenden Lokalisierungszonen-Kennungen, und der in diesen Zonen vorhandenen zugehörigen Endgeräte-Kennungen.

6. Verfahren zum Anwenden einer Sitzungsverarbeitungsregel auf mindestens ein mobiles Endgerät (UE), das über eine Kommunikationssitzung mit einem mobilen Netzwerk verbunden ist, das mehrere Lokalisierungszonen abdeckt, umfassend einen vorausgehenden Schritt zum Erhalten einer Gruppe von Sitzungsverarbeitungsregeln, die einer Untergruppe der mehreren Zonen zugeordnet sind, wobei das Verfahren von einem Gerät (PCRF) des mobilen Netzwerks umgesetzt wird, das eine Sitzungsverarbeitungsregel auf ein Endgerät in Abhängigkeit von mindestens seiner Lokalisierungszone anwenden kann,
wobei das Verfahren **dadurch gekennzeichnet ist, dass** es Folgendes umfasst:
- einen vorausgehenden Schritt zum Senden einer sogenannten Zoneninformation (IZ) an ein Gerät (GMLC, MMEi) des mobilen Netzwerks, das Lokalisierungsinformationen von mobilen Endgeräten sammeln kann, wobei die Zoneninformation mindestens eine Information bezüglich des Vorhandenseins von mindestens einer Zone aus den mehreren Lokalisierungszonen umfasst, genannt Spezialzone, der eine spezielle Sitzungsverarbeitungsregel zugeordnet wird,
- einen Schritt zum Erhalten einer Endgeräte-Präsenzkarte (CP1, CP2), die Spezialzonen-Kennungen zu Endgerät-Kennungen zuordnet, von dem Gerät (GMLC, MMEi) des mobilen Netzwerks, das Lokalisierungsinformationen von mobilen Endgeräten sammeln kann,
- sofern mindestens eine Endgerät-Kennung in der Präsenzkarte (CP1, CP2) enthalten ist, die folgenden Schritte:
∘ Identifizieren der Sitzungsverarbeitungsregel, die der Lokalisierungszone des Endgeräts so zugeordnet ist, wie es in der Präsenzkarte (CP1, CP2) angegeben ist,
∘ Erhalten einer vorher auf das mindestens eine Endgerät angewendeten Sitzungsverarbeitungsregel, und
∘ Vergleichen der zwei Regeln,
- wenn die identifizierte Regel und die vorher angewendete Regel unterschiedlich sind, einen Schritt (E6, E7) zum Anwenden der identifizierten Regel auf das mindestens eine Endgerät (UE).

7. Verfahren zum Anwenden einer Sitzungsverarbeitungsregel nach Anspruch 6, **dadurch gekennzeichnet, dass** die vorher angewendete Sitzungsverarbeitungsregel identifiziert wird durch die Suche, in einer anderen vorher erhaltenen Präsenzkarte (CP1, CP2), der Kennung des mindestens einen Endgeräts und seiner Lokalisierungszone, und schließlich durch die Identifizierung der Regel, die zu dieser Lokalisierungszone gehört.

8. Verfahren zum Anwenden einer Sitzungsverarbeitungsregel nach Anspruch 6, **dadurch gekennzeichnet, dass** der Schritt zum Erhalten der Endgeräte-Präsenzkarte (CP1, CP2) gefolgt wird von einem Schritt zum Anwenden einer Sitzungsverarbeitungsregel auf das mindestens eine Endgerät gemäß einer vorher festgelegten Regel, sobald eine Kennung des Endgeräts in einer vorher erhaltenen Präsenzkarte enthalten ist und nicht in der Präsenzkarte (CP1, CP2) enthalten ist.

9. Vorrichtung (100) zum Übertragen einer Präsenzkarte von mobilen Endgeräten, die über eine Kommunikationssitzung mit einem mobilen Netzwerk verbunden sind, das mehrere Lokalisierungszonen abdeckt, umgesetzt durch ein Gerät (GMLC, MMEi) des mobilen Netzwerks, das Lokalisierungsinformationen von mobilen Endgeräten sammeln kann, wobei die Vorrichtung **dadurch gekennzeichnet ist, dass** sie Folgendes umfasst:
- Mittel (140) zum vorausgehenden Erhalten einer sogenannten Zoneninformation (IZ), die mindestens eine Information bezüglich des Vorhandenseins von mindestens einer Zone aus den mehreren Lokalisierungszonen umfasst, genannt Spezialzone, der eine spezielle Sitzungsverarbeitungsregel zugeordnet wird,
- Mittel zum iterativen Aktualisieren einer Präsenzkarte (CP, CP1, CP2), die Lokalisierungszonen-Kennungen zu Endgerät-Kennungen zuordnet, wobei die Mittel die folgenden Mittel umfassen zum:
∘ Sammeln (150) einer Lokalisierungsinformation eines Endgeräts, die eine Lokalisierungszonen-Kennung dieses Endgeräts umfasst,
∘ Suchen in der Zoneninformation (IZ), ob eine Spezialzone vorhanden ist, die der Kennung der Lokalisierungszone entspricht, und,
∘ wenn die Spezialzone vorhanden ist, Hinzufügen der Kennung des Endgeräts und der Kennung der Lokalisierungszone zur Endgeräte-Präsenzkarte (CP, CP1, CP2),
- und Mittel (160) zum Übertragen der Endgeräte-Präsenzkarte auf ein Gerät (PCRF) des mobilen Netzwerks, das eine Sitzungsverarbeitungsregel auf ein Endgerät in Abhängigkeit von mindestens seiner Lokalisierungszone anwenden kann.

10. Vorrichtung (200) zum Anwenden einer Sitzungsverarbeitungsregel auf mindestens ein mobiles Endgerät, das über eine Kommunikationssitzung mit einem mobilen Netzwerk verbunden ist, das mehrere Lokalisierungszonen abdeckt, umfassend Mittel (240) zum vorausgehenden Erhalten einer Gruppe (RS) von Sitzungsverarbeitungsregeln, die einer Untergruppe der mehreren Zonen zugeordnet sind, wobei die Vorrichtung **dadurch gekennzeichnet ist, dass** sie Folgendes umfasst:
- Mittel (250) zum vorausgehenden Senden einer sogenannten Zoneninformation (IZ), die mindestens eine Information bezüglich des Vorhandenseins von mindestens einer Zone aus den mehreren Lokalisierungszonen umfasst, genannt Spezialzone, der eine spezielle Sitzungsverarbeitungsregel zugeordnet wird,
- Mittel (260) zum Erhalten einer Endgeräte-Präsenzkarte (CP, CP1, CP2), die Spezialzonen-Kennungen zu Endgerät-Kennungen zuordnet,
- sofern mindestens eine Endgerät-Kennung in der Präsenzkarte enthalten ist, die folgenden Mittel zum:
∘ Identifizieren der Sitzungsverarbeitungsregel, die der Lokalisierungszone des Endgeräts so zugeordnet ist, wie es in der Präsenzkarte angegeben ist,
∘ Erhalten einer vorher auf das mindestens eine Endgerät angewendeten Sitzungsverarbeitungsregel, und
∘ Vergleichen der zwei Regeln,
- wenn die identifizierte Regel und die vorher angewendete Regel unterschiedlich sind, Mittel zum Anwenden der identifizierten Regel auf das mindestens eine Endgerät.

11. Gerät (GMLC, MMEi) eines Kommunikationsnetzwerks, das Lokalisierungsinformationen von mobilen Endgeräten sammeln kann, **dadurch gekennzeichnet, dass** es eine Vorrichtung (100) zum Übertragen einer Präsenzkarte nach Anspruch 9 umfasst.

12. Gerät (PCRF) eines Kommunikationsnetzwerks, das eine Sitzungsverarbeitungsregel auf ein Endgerät in Abhängigkeit von seiner Lokalisierungszone und mindestens einer Regel anwenden kann, **dadurch gekennzeichnet, dass** es eine Vorrichtung (200) zum Anwenden einer Sitzungsverarbeitungsregel nach Anspruch 10 umfasst.

13. System zum Signalisieren des Vorhandenseins von Endgeräten, **dadurch gekennzeichnet, dass** es ein Gerät (PCRF) nach Anspruch 12 und mindestens ein Gerät (GMLC, MMEi) nach Anspruch 11 umfasst.

14. Computerprogramm, **dadurch gekennzeichnet, dass** es Programmcode-Anweisungen zum Umsetzen eines Verfahrens zum Übertragen einer Präsenzkarte nach Anspruch 1 umfasst, wenn dieses Programm von einem Prozessor ausgeführt wird.

15. Computerprogramm, **dadurch gekennzeichnet, dass** es Programmcode-Anweisungen zum Umsetzen eines Verfahrens zum Anwenden einer Sitzungsverarbeitungsregel nach Anspruch 6 umfasst, wenn dieses Programm von einem Prozessor ausgeführt wird.

## Claims

1. **Method for transmitting a presence map** of mobile terminals connected by a communication session to a mobile network covering a plurality of location areas, implemented by an appliance (GMLC, MMEi) of the mobile network capable of collecting items of information about the location of mobile terminals,
**the method being characterized in that** it comprises:
- a prior step (E3, F3b) of obtaining an item of so-called area information (IZ), originating from an appliance (PCRF) of the mobile network capable of applying a session-processing rule to a terminal according to at least its location area, the item of area information comprising at least one item of information related to the existence of at least one area among the plurality of location areas, called a special area, with which a special session-processing rule is associated,
- at least one iterative step of updating a presence map (CP1, CP2) associating location area identifiers with terminal identifiers, the step comprising the following steps:
∘ collecting (E1) an item of terminal location information (UE), comprising a location area identifier of this terminal,
∘ searching (E4, F4a), in the item of area information, for the existence of a special area corresponding to the identifier of said location area, and,
∘ when the special area exists, adding (E4, F4a) the terminal identifier and the location area identifier to the terminal presence map,
- and a step (E5, F3c) of transmitting the terminal presence map (CP1, CP2) to the appliance (PCRF) of the mobile network capable of applying a session-processing rule to a terminal according to at least its location area.

2. **Method for transmitting a presence map** according to Claim 1, **characterized in that** the first step (E1) of collecting an item of terminal location information is preceded by a step of sending a request to subscribe to the items of terminal location information.

3. **Method for transmitting a presence map** according to Claim 1, **characterized in that** the item of area information (IZ) comprises an element belonging to the group comprising:
- no special area identifier,
- at least one special area identifier.

4. **Method for transmitting a presence map** according to Claim 1, **characterized in that** the step (E5, F3c) of transmitting the presence map (CP1, CP2) is periodic, the duration of the period being included in the item of area information (IZ).

5. **Method for transmitting a presence map** according to Claim 1, **characterized in that** the prior step (E3, F3b) of obtaining an item of area information (IZ) is followed by a step of removing from the presence map (CP1, CP2) the location area identifiers absent from the item of area information, and the corresponding terminal identifiers present in these areas.

6. **Method for applying a session-processing rule** to at least one mobile terminal (UE) connected by a communication session to a mobile network covering a plurality of location areas, comprising a prior step of obtaining a set of session-processing rules associated with a sub-set of the plurality of areas, the method being implemented by an appliance (PCRF) of the mobile network capable of applying a session-processing rule to a terminal according to at least its location area, **the method being characterized in that** it comprises:
- a prior step of sending an item of so-called area information (IZ), intended for an appliance (GMLC, MMEi) of the mobile network capable of collecting items of information about the location of mobile terminals, the item of area information comprising at least one item of information related to the existence of at least one area among the plurality of location areas, called a special area, with which a special session-processing rule is associated,
- a step of obtaining a terminal presence map (CP1, CP2), associating special area identifiers with terminal identifiers, originating from the appliance (GMLC, MMEi) of the mobile network capable of collecting items of information about the location of mobile terminals,
- when at least one terminal identifier is included in the presence map (CP1, CP2), the following steps:
∘ identifying the session-processing rule associated with the terminal location area as indicated in the presence map (CP1, CP2),
∘ obtaining a session-processing rule previously applied to said at least one terminal, and
∘ comparing the two rules,
- when the identified rule and the previously applied rule are different, a step (E6,E7) of applying the identified rule to said at least one terminal (UE).

7. **Method for applying a session-processing rule** according to Claim 6, **characterized in that** the previously applied session-processing rule is identified by searching, in another previously obtained presence map (CP1, CP2), for the identifier of the at least one terminal and its location area, then by identifying the rule corresponding to this location area.

8. **Method for applying a session-processing rule** according to Claim 6, **characterized in that** the step of obtaining the terminal presence map (CP1, CP2) is followed by a step of applying a session-processing rule to the at least one terminal according to a predetermined rule, when an identifier of the terminal is included in a previously obtained presence map and is not included in the presence map (CP1, CP2).

9. **Device** (100) **for transmitting a presence map** of mobile terminals connected by a communication session to a mobile network covering a plurality of location areas, implemented by an appliance (GMLC, MMEi) of the mobile network capable of collecting items of information about the location of mobile terminals,
**the device being characterized in that** it comprises:
- means (140) for prior obtaining of an item of so-called area information (IZ), comprising at least one item of information related to the existence of at least one area among the plurality of location areas, called a special area, with which a special session-processing rule is associated,
- means for iteratively updating a presence map (CP, CP1, CP2) associating location area identifiers to terminal identifiers, the means comprising the following means:
∘ collecting (150) an item of terminal location information, comprising a location area identifier of this terminal,
∘ searching, in the item of area information (IZ), to find out whether or not a special area exists corresponding to the identifier of said location area, and,
∘ when the special area exists, adding the identifier of the terminal and the identifier of the location area to the terminal presence map (CP, CP1, CP2),
- and means (160) for transmitting the terminal presence map to a mobile network appliance (PCRF) capable of applying a session-processing rule to a terminal according to at least its location area.

10. **Device** (200) **for applying a session-processing rule** to at least one mobile terminal connected by a communication session to a mobile network covering a plurality of location areas, comprising means (240) for the prior obtaining of a set (RS) of session-processing rules associated with a sub-set of the plurality of areas,
**the device being characterized in that** it comprises:
- means (250) for prior sending of an item of so-called area information (IZ), comprising at least one item of information related to the existence of at least one area among the plurality of location areas, called a special area, with which a special session-processing rule is associated,
- means (260) for obtaining a terminal presence map (CP, CP1, CP2), associating special area identifiers with terminal identifiers,
- when at least one terminal identifier is included in the presence map, the following means:
∘ identifying the session-processing rule associated with the location area of the terminal as indicated in the presence map,
∘ obtaining a session-processing rule previously applied to said at least one terminal, and
∘ comparing the two rules,
- when the identified rule and the previously applied rule are different, means for applying the identified rule to said at least one terminal.

11. **Appliance** (GMLC, MMEi) of a communication network, capable of collecting items of information about the location of mobile terminals, **characterized in that** it comprises a device (100) for transmitting a presence map according to Claim 9.

12. **Appliance** (PCRF) of a communication network, capable of applying a session-processing rule to a terminal according to its location area and at least one rule, **characterized in that** it comprises a device (200) for applying a session-processing rule according to Claim 10.

13. **System** for signaling the presence of terminals, **characterized in that** it comprises an appliance (PCRF) according to Claim 12 and at least one appliance (GMLC, MMEi) according to Claim 11.

14. **Computer program, characterized in that** it comprises instructions for the implementation of a method for transmitting a presence map according to Claim 1, when this program is executed by a processor.

15. **Computer program, characterized in that** it comprises instructions for the implementation of a method for applying a session-processing rule according to Claim 6, when this program is executed by a processor.
